# EUROPÄISCHE PATENTANMELDUNG

(11) **EP 3 269 242 A1**
(43) Veröffentlichungstag der Anmeldung: **17.01.2018**
(21) Anmeldenummer: 17401074.4
(22) Anmeldetag: 05.07.2017
(51) Int. Cl.: A01M 7/00, F16K 31/53, F16K 1/22, F16K 31/04

(54) **PFLANZENSCHUTZSPRITZE**

(30) Priorität: 13.07.2016 DE 102016112813
(71) Anmelder: Amazonen-Werke H. Dreyer GmbH & Co. KG, 49205 Hasbergen (DE)
(72) Erfinder: Austermann, Stefan, 48291 Telgte (DE)

(57) **Zusammenfassung**

Pflanzenschutzspritze mit zumindest einem Flüssigkeitstank, zumindest einer mit dem Flüssigkeitstank über zumindest eine Saugleitung verbundene Flüssigkeüspumpe, an deren Druckseite zumindest eine zu zumindest eine zu zumindest einer mit Ausbringdüsen versehene Ausbringleitung führende Druckleitung angeschlossen ist, zumindest einem in der Druckleitung angeordneten Druckregelventil, von dem zumindest eine Zweigleitung, die in dem Flüssigkeitstank und/oder in die Saugleitung ausmündet, abzweigt, wobei das Druckregelventil ein in unterschiedliche Durchflussquerschnitte freigebende Positionen über ein motorisches Stellelement einstellbares Ventilelement aufweist. Um ein relativ klein bauendes und schnell reagierendes Druckregelventil zu schaffen, ist vorgesehen, dass das Ventilelement als an einer verdrehbar gelagerten Ventilwelle angeordnete Ventilklappe ausgebildet ist, das die Ventilklappe asymmetrisch an der Ventilwelle angeordnet ist.

## Beschreibung

Die Erfindung betrifft eine Pflanzenschutzspritze gemäß des Oberbegriffes des Patentanspruches 1 und ein Druckregelventil nach Anspruch 9.

Eine derartige Pflanzenschutzspritze mit einem entsprechenden Flüssigkeitsverlauf ist in der DE 10 2004 040 807 A1 beschrieben. Hierzu weist die Pflanzenschutzspritze einen Flüssigkeitstank, einen mit dem Flüssigkeitstank über zumindest eine Saugleitung verbundene Flüssigkeitspumpe, an deren Druckseite zumindest eine zu zumindest eine zu zumindest einer mit Ausbringdüsen versehene Ausbringleitung führende Druckleitung angeschlossen ist, auf. In der Druckleitung ist ein Druckregelventil angeordnet, von dem zumindest eine Zweigleitung, die in dem Flüssigkeitstank und/oder in die Saugleitung ausmündet, abzweigt. Das Druckregelventil weist ein in unterschiedliche Durchflussquerschnitte freigebende Positionen über ein motorisches Stellelement einstellbares Ventilelement auf. Die bekannten Druckregelventile reagieren entweder bei einer Ausbringmengenänderung beispielsweise durch Veränderung der aktivenTeilbreitenschaltung oder bei einer Ausbringmengenänderung durch eine Geschwindigkeitsänderung relativ langsam und benötigen viel Bauraum.

Der Erfindung liegt die Aufgabe zu Grunde, ein relativ klein bauendes und schnell reagierendes Druckregelventil zu schaffen.

Diese Aufgabe der erfindungsgemäß dadurch gelöst, dass das Ventilelement als an einer verdrehbar gelagerten Ventilwelle angeordnete Ventilklappe ausgebildet ist, dass die Ventilklappe asymmetrisch an der Ventilwelle angeordnet ist.

Infolge dieser Maßnahmen wird durch die erfindungsgemäß ausgebildete und asymmetrisch an der Ventilwelle angeordnete Ventilklappe erreicht, dass der Flüssigkeitsdruck und/oder die Flüssigkeitsströmung bei dem Vorbeiströmen an der Ventilklappe ein Drehmoment auf die Ventilwelle ausübt. Diesem Drehmoment wirkt das motorische Stellelement entgegen. Die hierzu aufzubringende Kraft, bei einem Elektromotor beispielsweise die an den Elektromotor anliegende Spannung oder die aufzubringende Stromstärke ist proportional zu dem Systemdruck und oder der Flüssigkeitsströmung in der Flüssigkeitsleitung. Weiterhin ergibt sich der Vorteil, dass Druckstöße im System ohne großen Regelungsaufwand sehr schnell abgebaut werden können. Der Systemdruck und oder die vorbei strömende Flüssigkeitsmenge kann über eine Veränderung der auf dem motorischen Stellelement einwirkenden Systembeaufschlagung, wie beispielsweise bei einem an einem Elektromotor anliegenden Motorspannung oder Stromstärke, höchst dynamisch verändert und angesteuert werden. Somit kann der gewünschte Spritzdruck direkt angesteuert werden, so dass kaum noch Wegezeiten entstehen, was Spritzfehler extrem animieren kann. Außerdem baut das ganze System sehr kompakt und ist dynamisch mit einem geringen Energieaufwand anzusteuern.

Eine einfache und kompakte Bauweise für das erfindungsgemäß ausgestaltete Druckregelventil mit dem motorischen Stellelement für eine Feldspritze lässt sich dadurch schaffen, dass das motorische Stellelement mit seiner Abtriebswelle ohne Zwischenschaltung eines selbsthemmenden Getriebes kraftschlüssig mit der Ventilwelle verbunden ist.

Eine einfache Ausgestaltung der Verbindung der Ventilwelle mit der Abtriebswelle des motorischen Stellelementes wird dadurch geschaffen, dass zwischen der Ventilwelle und der Abtriebswelle des motorischen Stellelementes ein nichtselbsthemmendes Zahnradgetriebe angeordnet ist. Aufgrund der Anordnung eines nicht selbst hemmenden Zahnradgetriebes entstehen nur sehr geringe Reibungskräfte, so dass eine sehr einfache Regelung der Einstellung der Ventilklappe aufgrund der an der Ventilklappe und/oder der Ventilwelle entstehenden Drehmomente möglich ist. Vorteilhaft kommen Zahnradgetriebe, Stirnradgetriebe zum Einsatz

Um die Ventilklappe in entsprechender Weise entsprechend des benötigten Systemdrucks und/oder der auszubringende Flüssigkeitsmenge einstellen zu können, ist vorgesehen, dass eine elektronische Steuer- und/oder Regeleinrichtung vorgesehen ist, dass die elektronische Steuer- und/oder Regeleinrichtung mit dem motorischen Stellelement verbunden ist.

Diese Ansteuerung kann in einfacher Weise dadurch geschehen, dass über die elektronische Steuer- und/oder Regeleinrichtung das motorisches Stellelement entsprechend der Einstellung des erforderlichen Druckes zur Erreichung der gewünschten Ausbringmenge über die Ausbringleitung mit der zu dem erforderichen Druck proportionalen Stromspannung mit geeigneten Mitteln beaufschlagt wird.

Eine besonders einfache Ausgestaltung des motorischen Stellelementes ergibt sich dadurch, dass das motorische Stellelement als Elektromotor ausgebildet ist. Es ist jedoch auch möglich, pneumatisch oder hydraulische motorische Stellelemente einzusetzen, die dann in geeigneter Weise über geeignete Mittel von der elektronischen Steuer- und/oder Regeleinrichtung angesteuert werden.

Bei dem Einsatz eines Elektromotors ist vorgesehen, dass die elektronische Steuer- und/oder Regeleinrichtung die zur Aufrechterhaltung der gewünschten Ventilstellung erforderliche Stromspannung aufgrund der durch den Flüssigkeitsstrom auf die asymmetrisch an der Ventilwelle angeordnete Ventilklappe zur Erreichung der gewünschten Ausbringmenge über die Ausbringleitung einwirkenden Drehkräfte ermittelt und aus der ermittelten Stromspannung den Elektromotor bei Abweichung von dem Sollwert entsprechend ansteuert und die Ventilklappe durch Verdrehen der Ventilwelle durch den Elektromotor in die erforderliche Ventilklappenstellung bringbar ist.

Infolge dieser Maßnahmen lässt sich mit einem geringen Regelaufwand die Ventilklappe entsprechend einstellen.

Zur Realisierung der außermittigen Anordnung der Ventilklappe an der Ventilwelle, ist vorgesehen, dass die Ventilklappe für die asymmetrische Anordnung an der Ventilwelle um 2-10 % des Durchmessers der Ventilklappe versetzt zu der Mitte der Ventilklappe an der Ventilwelle angeordnet ist.

Weiterhin wird Schutz für ein Druckregelventil mit einer vorbeschriebenen asymmetrischen Anordnung der Ventilklappe an der in Kiel Welle beansprucht.

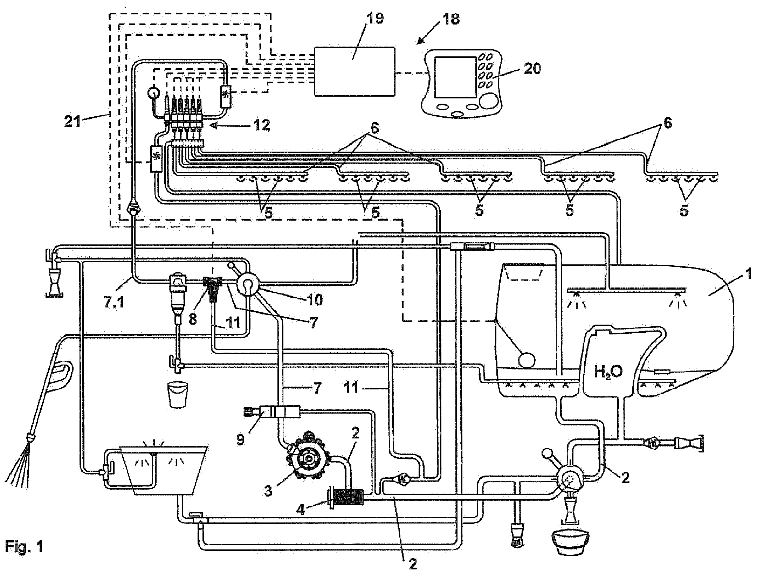

Weitere Einzelheiten der Erfindung sind der Beispielsbeschreibung und den Zeichnungen zu entnehmen. Die Zeichnungen zeigen
- Fig.1: einen Flüssigkeitsplan für eine Pflanzenschutzspritze mit dem erfindungsgemäßen Druckregelventil in Prinzipdarstellung,

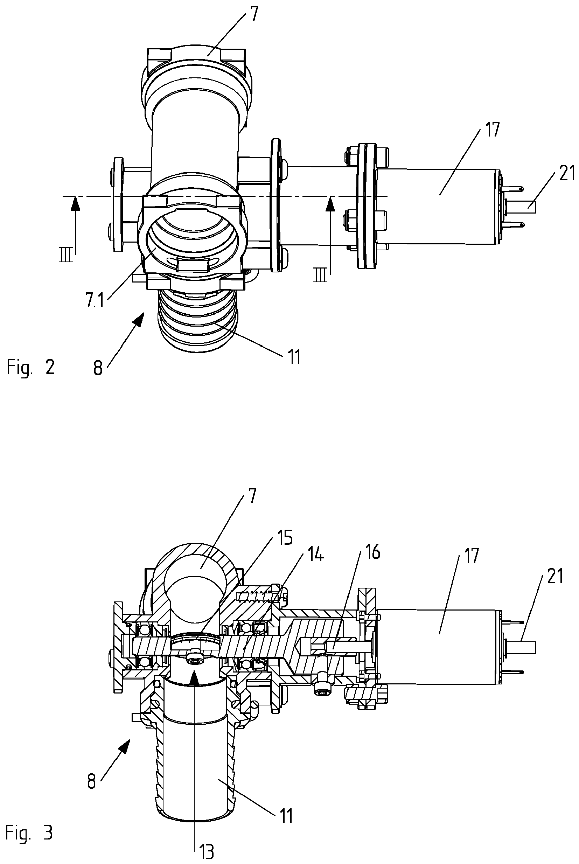

- Fig.2: das erfindungsgemäße Druckregelventil in perspektivischer Darstellung,
- Fig.3: das Druckregelventil in der Ansicht gemäß Fig.2, jedoch im Schnitt III - III,

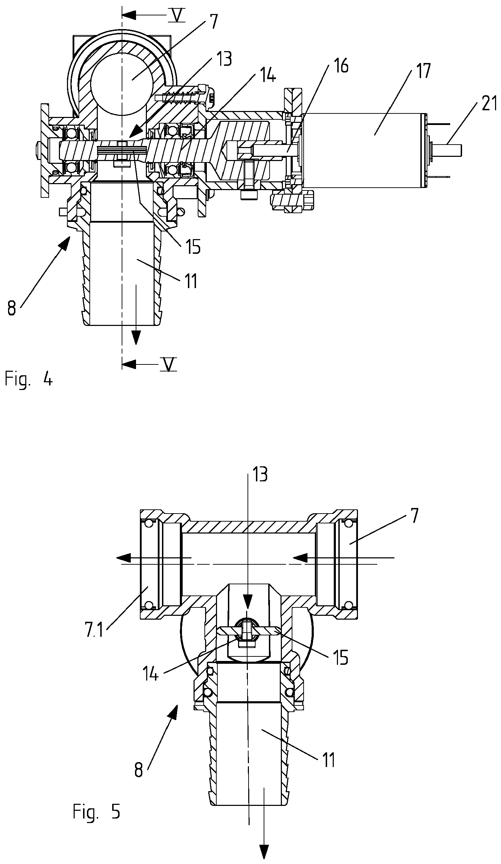

- Fig.4: das Druckregelventil im Schnitt III - III,
- Fig.5: das Druckregelventil im Schnitt V - V,

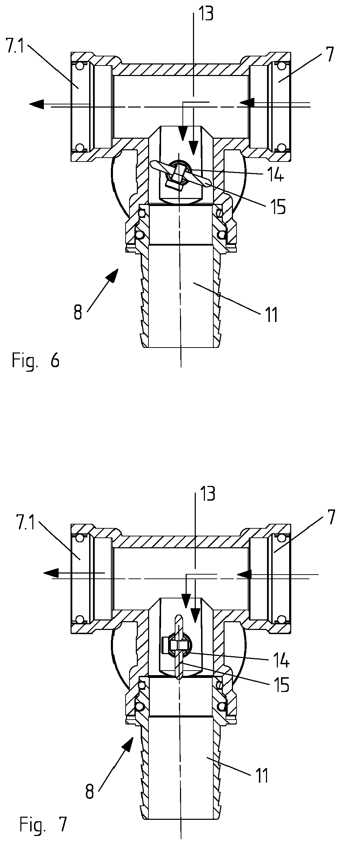

- Fig.6: das Druckregelventil im Schnitt in der Darstellungsweise nach Fig.5, jedoch mit einer anderen Einstellung der Ventilklappe,
- Fig.7: das Druckregelventil im Schnitt in der Darstellungsweise nach Fig.5, jedoch mit einer weiteren Einstellung der Ventilklappe.

Die Pflanzenschutzspritze weist unter anderem einen Flüssigkeitstank 1, zumindest eine mit dem Flüssigkeitstank 1 über zumindest eine Saugleitung 2 verbundene Flüssigkeitspumpe 3 auf. In der Saugleitung 2 ist ein Flüssigkeitsfilter 4 angeordnet. An der Druckseite der Flüssigkeitspumpe 3 ist zumindest eine zu zumindest einer mit Ausbringdüsen 5 versehene Ausbringleitung 6 führende Druckleitung 7 angeschlossen. In der Druckleitung 7 ist ein Druckregelventil 8 angeordnet. Zwischen der Flüssigkeitspumpe 3 und dem Druckregelventil 8 sind in der Druckleitung 7 ein Sicherheitsventil 9 und ein Mehrwegehahn 10 zur Einstellung verschiedener Funktionen der Pflanzenschutzspritze angeordnet. Von dem Druckregelventil 8 zweigt zumindest eine Zweigleitung 11, die in dem Flüssigkeitstank und/oder in die Saugleitung ausmündet, ab. Von dem Druckregelventil 8 führt eine weiterführende Druckleitung 7.1 zu der Teilbreitenarmatur 12. An der Teilbreitenarmatur 12 sind die Ausbringleitungen 6 angeschlossen, so dass diese mit der Druckleitung 7 und 7.1 verbunden sind. Mittels der Teilbreitenarmatur 12 können die verschiedenen Ausbringleitungen 6 zu- oder abgeschaltet werden.

Über das Druckregelventil 8 sind unterschiedliche Durchflussquerschnitte zur Einstellung des Druckes in der Druckleitung 7.1 und den Ausbringleitungen 6 einzustellen. Hierüber lässt sich die von den Ausbringdüsen 5 auszubringende Ausbringmenge von Spritzflüssigkeit einstellen. Zur Einstellung der unterschiedlichen Durchflussquerschnitte weist das Druckregelventil 8 ein unterschiedliche Positionen freigebendes Ventilelement 13 in der von der Druckleitung 7 abzweigenden Zweigleitung 11 auf. Das Ventilelement 13 ist als an einer verdrehbar gelagerten Ventilwelle 14 angeordnete Ventilklappe 15 ausgebildet. Die Ventilklappe 15 ist asymmetrisch an der Ventilwelle 14 angeordnet. Zur Erreichung der asymmetrischen Anordnung der Ventilklappe 15 an der Ventilwelle 14 ist die Ventilklappe 15 um 2-10 % des Durchmessers der Ventilklappe 15 versetzt zu der Mitte der Ventilklappe 15 an der Ventilwelle 14 angeordnet.

Die Ventilwelle 14 ist formschlüssig mit der Abtriebswelle 16 des im Ausführungsbeispiel als Elektromotor 17 ausgebildeten motorischen Stellelementes verbunden. Über den Elektromotor 17 ist das als Ventilklappe 15 ausgebildete Ventilelement 13 in verschiedene freigebende Positionen für die Aufteilung des Flüssigkeitsstromes in der Druckleitung 7 auf die Druckleitung 7.1 und der Zweigleitung 11 einstellbar. Wie vorgeschrieben ist das Ventilelement 13 als an einer verdrehbar gelagerten Ventilwelle 14 angeordnete Ventilklappe 15 ausgebildet ist, wobei die Ventilklappe 15 asymmetrisch an der Ventilwelle angeordnet ist.

Das als Elektromotor 17 ausgebildete motorische Stellelement ist mit seiner Abtriebswelle 16 ohne Zwischenschaltung eines selbsthemmenden Getriebes direkt kraftschlüssig mit der Ventilwelle 14 verbunden.

Es ist auch möglich, dass zwischen der Ventilwelle 17 und der Abtriebswelle 16 des motorischen Stellelementes ein nichtselbsthemmendes Zahnradgetriebe angeordnet ist. Diese Ausgestaltung ist erforderlich, damit eine einfache Kraftübertragung von dem Elektromotor 17 auf die Ventilwelle 14 ohne Reibungsverluste erfolgen kann.

Um über den Elektromotor 17 die Ventilwelle 14 und somit die Ventilklappe 15 in die richtige Position einzustellen, ist eine elektronische Steuer- und/oder Regeleinrichtung 18 vorgesehen. Die elektronische Steuer- und/oder Regeleinrichtung 18 ist im Ausführungsbeispiel als Jobrechner 19 und Bedienterminal 20 ausgebildet. Die elektronische Steuer- und/oder Regeleinrichtung 18 ist über die Datenverbindung 21 mit dem Elektromotor 17 verbunden. Über die elektronische Steuer- und/oder Regeleinrichtung 18 wird der Elektromotor 17 entsprechend der Einstellung des erforderlichen Druckes zur Erreichung der gewünschten Ausbringmenge über die zu dem Ausbringleitungen 6 führenden Druckleitung 7.1 mit der zu dem erforderlichen Druck proportionalen Stromspannung mit geeigneten Mitteln beaufschlagt.

Die elektronische Steuer- und/oder Regeleinrichtung 18 ermittelt die zur Aufrechterhaltung der gewünschten Ventilstellung des Ventilelementes 13 erforderliche Stromspannung aufgrund der durch den Flüssigkeitsstrom auf die asymmetrisch an der Ventilwelle 14 angeordnete Ventilklappe 15 zur Erreichung der gewünschten Ausbringmenge über die Ausbringleitungen 6 einwirkenden Drehkräfte und aus der ermittelten Stromspannung wird der Elektromotor 10 bei Abweichung von dem Sollwert entsprechend angesteuert und die Ventilklappe 15 durch Verdrehen der Ventilwelle 14 durch den Elektromotor 10 in die erforderliche Ventilklappenstellung gebracht.

In vorgeschriebener Weise wird der Spritzdruck in der Druckleitung 7.1 und den Ausbringleitungen 6 über die Ventilklappe 15 entsprechend eingestellt. Durch die durch die Ventilklappe 15 freigegebenen Öffnungsquerschnitte wird die Aufteilung der über die Druckleitung 7 zugeführte Flüssigkeitsmenge in gewünschter Weise auf die zu den Ausbringleitungen 6 führenden Druckleitung 7.1 und die Zweigleitung 11 vorgenommen. Durch die mittig versetzte Anordnung der Ventilklappe 15 an der Ventilwelle 14 wird von der vorbeiströmenden Flüssigkeit ein Drehmoment über die Ventilwelle 14 auf die Abtriebswelle 16 des Elektromotors 17 ausgeübt Dieses Drehmoment ist proportional zu dem in dem System vorherrschenden Druck sowie von der auf den Elektromotor 17 zur Aufrechterhaltung der Stellung der Ventilklappe 15 erforderlichen Spannung und/oder Stromstärke. Hieraus können dann entsprechende Steuerungssignale von der elektronischen Steuer- und/oder Regeleinrichtung 18 abgeleitet werden, um in entsprechender Weise den Elektromotor 17 ansteuern und/oder regeln zu können.

Somit kann der Spritzdruck direkt angesteuert werden, so dass kaum noch Regelseiten entstehen. Hierdurch werden Spritzfehler extrem minimiert. Das ganze System ist sehr kompakt ausgestaltet sowie dynamisch und elektrisch mit geringem Energieaufwand anzusteuern.

Durch den geringen Mittenversatz der Ventilwelle 14 zu der Mitte der Ventilklappe 15 entsteht durch den hydraulischen Systemdruck ein einfach zu beherrschendes Drehmoment, welches wiederum proportional zu einer schnell sich verändernden Spannung oder Stromstärke eines permanent bestromten Elektromotors steht. Unabhängig von der Stellung der Ventilklappe 15 entspricht der Systemdruck somit proportional der Spannung und der Stromstärke und kann ohne Regelaufwand in der gewünschten Stärke gehalten werden. Notwendige Druckveränderungen, um eine Ausbringmengenvariation oder Gleichhaltung der Ausbringmenge bei sich ändernden Ausbringparameter, wie beispielsweise der Geschwindigkeit der Pflanzenschutzspritze, können durch eine einfache Anpassung der Spannung und/oder Stromstärke für den Elektromotor 17 herbeigeführt werden.

## Patentansprüche

1. Pflanzenschutzspritze mit zumindest einem Flüssigkeitstank (1), zumindest einer mit dem Flüssigkeitstank (1) über zumindest eine Saugleitung (2) verbundene Flüssigkeitspumpe (3), an deren Druckseite zumindest eine zu zumindest eine zu zumindest einer mit Ausbringdüsen (5) versehene Ausbringleitung (6) führende Druckleitung (7, 7.1) angeschlossen ist, zumindest einem in der Druckleitung (7) angeordneten Druckregelventil (8), von dem zumindest eine Zweigleitung (11), die in dem Flüssigkeitstank (1) und/oder in die Saugleitung (2) ausmündet, abzweigt, wobei das Druckregelventil (8) ein in unterschiedliche Durchflussquerschnitte freigebende Positionen über ein motorisches Stellelement (17) einstellbares Ventilelement (13) aufweist, **dadurch gekennzeichnet, dass** das Ventilelement (13) als an einer verdrehbar gelagerten Ventilwelle (14) angeordnete Ventilklappe (15) ausgebildet ist, dass die Ventilklappe (15) asymmetrisch an der Ventilwelle (14) angeordnet ist.

2. Pflanzenschutzspritze nach Anspruch 1, **dadurch gekennzeichnet, dass** das motorische Stellelement (17) mit seiner Abtriebswelle (16) ohne Zwischenschaltung eines selbsthemmenden Getriebes kraftschlüssig mit der Ventilwelle (14) verbunden ist.

3. Pflanzenschutzspritze nach einem der vorhergehenden Ansprüche, **dadurch gekennzeichnet, dass** zwischen der Ventilwelle (14) und der Abtriebswelle (16) des motorischen Stellelementes (13) ein nichtselbsthemmendes Zahnradgetriebe angeordnet ist.

4. Pflanzenschutzspritze nach einem der vorhergehenden Ansprüche, **dadurch gekennzeichnet, dass** eine elektronische Steuer- und/oder Regeleinrichtung (18, 19, 20) vorgesehen ist, dass die elektronische Steuer- und/oder Regeleinrichtung (18, 19, 20) mit dem motorischen Stellelement (17) verbunden ist.

5. Pflanzenschutzspritze nach einem der vorhergehenden Ansprüche, **dadurch gekennzeichnet, dass** über die elektronische Steuer- und/oder Regeleinrichtung (18, 19, 20) das motorisches Stellelement (17) entsprechend der Einstellung des erforderlichen Druckes zur Erreichung der gewünschten Ausbringmenge über die Ausbringleitung (6, 7.1) mit der zu dem erforderlichen Druck proportionalen Stromspannung mit geeigneten Mitteln beaufschlagt wird.

6. Pflanzenschutzspritze nach einem der vorhergehenden Ansprüche, **dadurch gekennzeichnet, dass** das motorische Stellelement als Elektromotor (17) ausgebildet ist.

7. Pflanzenschutzspritze nach Anspruch 6, **dadurch gekennzeichnet, dass** die elektronische Steuer- und/oder Regeleinrichtung (18, 19, 20) die zur Aufrechterhaltung der gewünschten Ventilstellung erforderliche Stromspannung aufgrund der durch den Flüssigkeitsstrom auf die asymmetrisch an der Ventilwelle (14) angeordnete Ventilklappe (15) zur Erreichung der gewünschten Ausbringmenge über die Ausbringleitung (6, 7.1) einwirkenden Drehkräfte ermittelt und aus der ermittelten Stromspannung den Elektromotor (17) bei Abweichung von dem Sollwert entsprechend ansteuert und die Ventilklappe (15) durch Verdrehen der Ventilwelle (14) durch den Elektromotor (17) in die erforderliche Ventilklappenstellung bringbar ist.

8. Pflanzenschutzspritze nach einem der vorhergehenden Ansprüche, **dadurch gekennzeichnet, dass** die Ventilklappe (15) für die asymmetrische Anordnung an der Ventilwelle (14) um 2-10 % des Durchmessers der Ventilklappe (15) versetzt zu der Mitte der Ventilklappe (15) an der Ventilwelle (14) angeordnet ist.
